# EUROPÄISCHE PATENTSCHRIFT

(11) **EP 0 953 691 B1**
(45) Veröffentlichungstag und Bekanntmachung des Hinweises auf die Patenterteilung: **12.10.2005**
(21) Anmeldenummer: 99108217.3
(22) Anmeldetag: 27.04.1999
(51) Int. Cl.: E03F 1/00

(54) **Versickerungsrohr**
Infiltration pipe
Conduit d'infiltration

(30) Priorität: 29.04.1998 DE 29807726 U
(43) Veröffentlichungstag der Anmeldung: 03.11.1999
(73) Patentinhaber: REHAU AG + Co, 95111 Rehau (DE)
(72) Erfinder: Lünstedt, Frank, 95111 Rehau (DE); Müller, Stefan, 95111 Rehau (DE); Jenne, Andreas, 95111 Rehau (DE)

(56) Entgegenhaltungen:
- DE-A- 2 459 642
- GB-A- 956 046
- NL-A- 8 304 436
- US-A- 3 374 634
- US-A- 5 549 415

## Beschreibung

Die Erfindung betrifft ein Versickerungsrohr für ein vorzugsweise kiesgefülltes Rigolen-System, wobei das Versickerungsrohr als Vollsickerrohr über den Umfang verteilt schlitzförmige Wasserdurchtrittsöffnungen aufweist.

Derartige Versickerungsrohre dienen als Verteil-, Transport- und/oder Speicherelement in kiesgefüllten Rigolen-Systemen. Anfallendes Oberflächenwasser wird dabei entweder über Schächte direkt in das Versickerungsrohr eingeleitet oder wird von außen über den Kieskörper des Mulden-Rigolen-Systems durch die Wasserdurchtrittsöffnungen des Versickerungsrohres in dessen Lumen eingetragen.

Die Vorteile solcher Versickerungsrohre werden darin gesehen, daß das aufgenommene Regenwasser gleichmäßig über die gesamte Rigolenlänge verteilt werden kann. Dadurch wird die Versickerungswirkung erhöht, denn über die schlitzförmigen Wasserdurchtrittsöffnungen in der Wandung des Versickerungsrohres kann das Regen- oder Oberflächenwasser in die Kiesrigole austreten und von dort in den Erdboden versickern.

Dabei wird im Falle zu geringer Wasserdurchlässigkeit des Bodens das anfallende Regen-/Oberflächenwasser nur teilweise oder gar nicht versickert. In diesem Fall dient das Versickerungsrohr hauptsächlich als Transportelement zu einem nachgeschalteten Schacht mit Drosseleinrichtung in einem Rigolen-System.

Darüber hinaus dient das Versickerungsrohr in der Kiesrigole neben dem Kieskörper auch noch als zusätzliches Speicherelement zur Aufnahme des Regen-/Oberflächenwassers. Über die Wasserdurchtrittsöffnungen in der Wandung des Versickerungsrohres kann dieses gespeicherte Wasser nach und nach in die Kiesrigole selbst austreten.

Gattungsgemäße Versickerungsrohre sind in den Veröffentlichungen der Firma Fränkische Rohrwerke Gebrüder Kirchner GmbH & Co unter den Drucknummern 1924.01.98.05 W, 1912.07.97.10 HT und 1318.07.97.05 W beschrieben. Es handelt sich hierbei um Vollsickerrohre aus Polyethylen hoher Dichte mit einem symmetrischen Schlitzbild von sechs oder zwölf Schlitzreihen am Rohrumfang und einer einheitlichen Schlitzbreite von ca. 1,2 mm.

Die Wasserdurchtrittsfläche beträgt bei diesen Rohren wenigstens 180 cm²/m. Diese große Wasserdurchtrittsfläche soll eine schnelle Aufnahme bzw. Abgabe des anfallenden Regen-/Oberflächenwassers ermöglichen.

Weiterhin wird in der US 4,950,103 ein gattungsgemäßes Versickerungsrohr beschrieben. Dieses Versickerungsrohr weist abwechselnde ringförmige Erhöhungen und Vertiefungen auf einer Rohraußenwand auf. Die Rohrinnenwand ist glatt und gleichmäßig ihrer Länge nach. Die kombinierte Außen- und Innenwand bilden ein langes Rohr, wobei in abwechselnden bestimmten Vertiefungen der Rohraußenwand bzw. der Rohrinnenwand eine Mehrzahl an Schlitzen quer zur Längsachse des Rohres angeordnet sind, so dass Wasser durch diese Schlitze in das Rohr abfließen kann. Zudem enthält jede ringförmige Erhöhung an der Rohraußenwand eine vertiefte Rille, wobei auf dem Grund jeder dieser Rillen sich eine Mehrzahl kreisförmiger Öffnungen mit einem kleineren Durchmesser an der Rohraußenseite befinden. Entsprechende Öffnungen befinden sich ebenfalls an der glatten Innenwand des Rohres, so dass Wasser durch diese zusätzlichen Öffnungen, die sich in einem Abstand zu den in den Rillen der ringförmigen Erhöhung befindlichen Öffnungen befinden, in das Rohr abfließen kann. Dieses Versickerungsrohr soll ein besseres Abfließen des Wassers von außerhalb des Rohres in das Innere des Rohres sowie eine verbesserte Bewegung des Wassers durch das Rohr mittels der glatten Rohrinnenwand ermöglichen.

Derartige Rohre weisen außer den größeren Wasserdurchtrittsöffnungen keine speziellen Vorteile im Vergleich zu herkömmlichen Dränagerohren auf. Die an ein Versickerungsrohr für ein kiesgefülltes Rigolen-System zu stellende Anforderung nach einer speziellen Verteil- und Versickerungsfunktion, insbesondere im unteren Segment des Rohres, wird durch das gewählte symmetrische Schlitzbild in der Wand eines Vollsickerrohres nach dem Stand der Technik nicht erfüllt. So haben die seitlichen Schlitzreihen die gleichen Schlitzbreiten wie die oberen und unteren Schlitzreihen und besitzen damit den gleichen Wasserdurchtrittswiderstand wie die Schlitzreihen an der Rohrsohle. Damit tragen diese Schlitzreihen nicht den besonderen Anforderungen an die Versickerungsleistung bei stärkeren Regenereignissen mit höheren Füllständen im Rohr Rechnung. Darüber hinaus trägt das einheitliche Schlitzbild mit relativ kleinen Schlitzbreiten von ca. 1,2 mm, insbesondere im oberen Rohrsegment, zur Gefahr des Zusetzens der Öffnungen durch Feinteile bei. Auch wird durch die engen Schlitze ein Druckausgleich im Rohr, der bei schneller Vollfüllung erwünscht ist, unzulässig behindert.

Hier setzt die Erfindung ein, die es sich zur Aufgabe gestellt hat, diese Nachteile des Standes der Technik zu vermeiden und ein Versickerungsrohr für ein kiesgefülltes Rigolen-System anzugeben, welches neben optimalen Befülleigen- und Verteileigenschaften gleichermaßen optimale Versickerungseigenschaften des angefallenen Regen-/Ober flächenwassers aufweist. Erfindungsgemäß wird dies mit einem Versickerungsrohr mit den Merkmalen des Anspruchs 1 gelöst. Weitere vorteilhafte Ausgestaltungen sind in den Unteransprüchen ausgeführt.

Die Erfindung lehrt weiter, daß die unterschiedliche Fläche der Wasserdurchtrittsöffnungen durch eine Variation der Schlitzbreiten erfolgt, wobei es legitim ist, dies durch unterschiedliche Längen bzw. unterschiedliche Anzahl der Wasserdurchtrittsöffnungen in den Segmenten zu erreichen.
In einer weiteren vorteilhaften Ausführungsform weist das Rohrsegment im Bereich der Rohrsohle die kleinste, das Rohrsegment im Bereich des Rohrkämpfers die größte und das Rohrsegment im Bereich des Rohrscheitels eine mittlere Fläche der Wasserdurchtrittsöffnungen auf.
Vorteilhaft besitzt das Rohrsegment im Bereich der Rohrsohle wenigstens zwei Schlitzreihen von Wasserdurchtrittsöffnungen einer Breite von 1,2 mm.

Dagegen weist das Rohrsegment im Bereich des Rohrkämpfers wenigstens zwei Schlitzreihen von Wasserdurchtrittsöffnungen einer Breite von 1,8 mm auf. Schließlich besitzt das Rohrsegment im Bereich des Rohrscheitels wenigstens vier Schlitzreihen von Wasserdurchtrittsöffnungen einer Breite von 1,6 mm.

Für eine optimale Versickerungsleistung hat es sich als zweckmäßig erwiesen, daß wenigstens acht Schlitzreihen um den Rohrumfang herum angeordnet sind und daß die Schlitzreihen eine Schlitzfläche von max. 150 cm²/m bilden. Schließlich ist es von Vorteil, daß auf dem Rohrscheitel zentrisch zwischen den vier Schlitzreihen der Wasserdurchtrittsöffnungen eine Verlegemarkierung angeordnet ist. Aut diese Weise kann die richtige Lage des Rohres für eine optimale Versickerungsleistung im kiesgefüllten Rigolen-System verläßlich eingehalten werden.

Die Vorteile des erfindungsgemäßen Versickerungsrohres liegen in der unterschiedlichen Breite der Wasserdurchtrittsöffnungen am Rohrumfang. So gewähren die wenigstens zwei nebeneinander angeordneten Reihen an der Rohrsohle mit ihrer Schlitzbreite von 1,2 mm eine gleichmäßige und vollständige Verteilung des im Rohr anfallenden Regen-/Oberflächenwassers bei Teilfüllung. Dadurch wird eine zu schnelle Abgabe des Wassers an die Kiesrigole und damit ein partieller Schadstoffeintrag im Regelfall, nämlich der Teilfüllung des Rohres, verhindert.

Die breiteren Schlitze am Rohrkämpfer und am Rohrscheitel mit jeweils 1,8 mm und 1,6 mm Schlitzweite sorgen für eine optimale seitliche und obere Wasserabgabe in die Kiesrigole bei unterschiedlichen Füllständen im Versickerungsrohr. Darüber hinaus erhöhen die breiteren Schlitze am Rohrkämpfer und im Rohrscheitel die Sicherheit gegen Zusetzen der Öffnungen durch Feinteile.
Die wenigstens vier nebeneinanderliegenden Schlitzreihen am Rohrscheitel mit ihrer Schlitzbreite von 1,6 mm und die breiteren Schlitze am Rohrkämpfer mit ihrer Schlitzbreite von 1,8 mm erleichtern den Wassereintritt des Versickerungswassers von oben bzw. von der Seite bei der Rigolen-Versickerung.

Das Versickerungsrohr kann dadurch seine Verteil- und Transportfunktion schneller und sicher übernehmen, und zwar unabhängig vom Einstauzustand der Kiesrigole. Ebenso garantieren diese vier Schlitzreihen am Rohrscheitel und die breiten Schlitze am Rohrkämpfer eine erhöhte Sicherheit durch einen schnellen Druckausgleich bei Rohrvollfüllung.

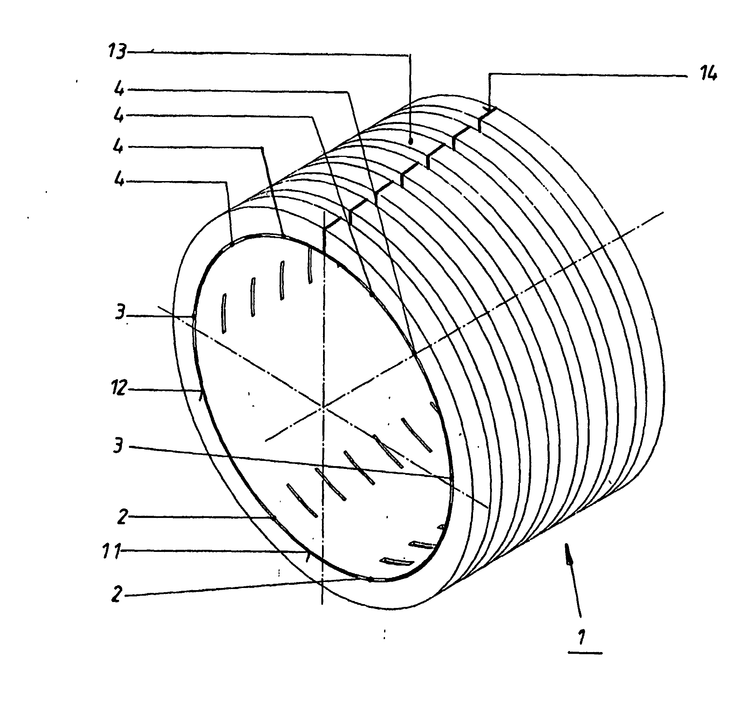

In der Zeichnung ist ein Ausführungsbeispiel des erfindungsgemäßen Versickerungsrohres 1 schematisch dargestellt. Das Versickerungsrohr 1 ist beispielsweise ein ringgewelltes Rohr aus Polyethylen. In der isometrischen Darstellung des Querschnitts des Versickerungsrohres 1 sind die unterschiedlichen Reihen von Wasserdurchtrittsöffnungen am Umfang des Versickerungsrohres 1 dargestellt. So besitzen die beiden Schlitzreihen 2 an der Rohrsohle 11 die Schlitzbreite von 1,2 mm. Die beiden Schlitzreihen 3 im Bereich des Rohrkämpfers 12 besitzen dagegen erfindungsgemäß eine Schlitzbreite von 1,8 mm. Die vier im Bereich des Rohrscheitels 13 angedeuteten Schlitzreihen 4 haben dagegen eine Breite von 1,6 mm. Der Bereich des Rohrscheitels 13 ist noch durch eine Verlegemarkierung 14 besonders gekennzeichnet, wobei diese Verlegemarkierung 14 im Mittelbereich zwischen jeweils zwei der Schlitzreihen 4 am Rohrscheitel 13 angeordnet ist.

## Patentansprüche

1. Versickerungsrohr (1) für ein vorzugsweise kiesgefülltes Rigolen-System, wobei das Versickerungsrohr (1) als Vollsickerrohr über den Umfang verteilt schlitzförmige Wasserdurchtrittsöffnungen aufweist,
**dadurch gekennzeichnet,**
**dass** der Rohrumfang von der Rohrsohle (11) bis zum Rohrscheitel (13) in Rohrsegmente mit schlitzförmigen Wasserdurchtrittsöffnungen unterschiedlicher Fläche unterteilt ist, wobei das Rohrsegment im Bereich der Rohrsohle (11) die kleinste, das Rohrsegment im Bereich des Rohrkämpfers (12) die größte und das Rohrsegment im Bereich des Rohrscheitels (13) eine mittlere Fläche der Wasserdurchtrittsöffnungen aufweist.

2. Versickerungsrohr nach Anspruch 1, **dadurch gekennzeichnet, dass** die unterschiedliche Fläche der Wasserdurchtrittsöffnungen durch eine Variation der Schlitzbreiten erfolgt.

3. Versickerungsrohr nach Anspruch 1, **dadurch gekennzeichnet, dass** die unterschiedliche Fläche der Wasserdurchtrittsöffnungen durch unterschiedliche Längen der Schlitze erfolgt.

4. Versickerungsrohr nach Anspruch 1, **dadurch gekennzeichnet, dass** die unterschiedliche Fläche der Wasserdurchtrittsöffnungen durch eine unterschiedliche Anzahl der Wasserdurchtrittsöffnungen in den Rohrsegmenten erfolgt.

5. Versickerungsrohr nach einem der vorhergehenden Ansprüche, **dadurch gekennzeichnet, dass** das Rohrsegment im Bereich der Rohrsohle (11) wenigstens zwei Schlitzreihen (2) einer Schlitzbreite von 1,2 mm aufweist, welche symmetrisch zur Rohrachse in die Rohrwand eingebracht sind.

6. Versickerungsrohr nach einem der vorhergehenden Ansprüche, **dadurch gekennzeichnet, dass** das Rohrsegment im Bereich des Rohrkämpfers (12) wenigstens zwei Schlitzreihen (3) einer Schlitzbreite von 1,8 mm aufweist, welche symmetrisch zur Rohrachse in die Rohrwand eingebracht sind.

7. Versickerungsrohr nach einem der vorhergehenden Ansprüche, **dadurch gekennzeichnet, dass** das Rohrsegment im Bereich des Rohrscheitels (13) wenigstens vier Schlitzreihen (4) einer Schlitzbreite von 1,6 mm aufweist, welche symmetrisch zur Rohrachse in die Rohrwand eingebracht sind.

8. Versickerungsrohr nach einem der vorhergehenden Ansprüche, **dadurch gekennzeichnet, dass** wenigstens acht Schlitzreihen (2, 3, 4) um den Rohrumfang angeordnet sind und das die Schlitzreihen (2, 3, 4) eine Schlitzfläche von maximal 150 cm² pro Meter bilden.

9. Versickerungsrohr nach einem der vorhergehenden Ansprüche, **dadurch gekennzeichnet, dass** auf dem Rohrscheitel (13) zentrisch zwischen den vier Schlitzreihen (4) eine Verlegemarkierung (14) angeordnet ist.

## Claims

1. Percolation pipe (1) for a preferably gravel-filled water reservoir system, in which the percolation pipe (1) is a full-filter pipe with slot-shaped water admission openings distributed over its entire circumference,
**characterised by**:
The circumference of the pipe from the pipe base (11) to the pipe crown (13) is divided into segments with slot-shaped water admission openings of different areas. The pipe segment at the pipe base (11) has the smallest, the pipe segment at the pipe abutment (12) the largest and the pipe segment at the pipe crown (13) a medium area of the water admission openings.

2. Percolation pipe according to Claim 1, **characterised by**: The different areas of the water admission openings are achieved by variation of the slot widths.

3. Percolation pipe according to Claim 1, **characterised by**: The different areas of the water admission openings are achieved by different lengths of the slots.

4. Percolation pipe according to Claim 1, **characterised by**: The different areas of the water admission openings are achieved by different numbers of water admission openings in the pipe segments.

5. Percolation pipe according to one of the above claims, **characterised by**: The pipe segment at the pipe base (11) has at least two rows of slots (2) with a slot width of 1.2 mm arranged in the pipe wall symmetrically to the pipe axis.

6. Percolation pipe according to one of the above claims, **characterised by**: The pipe segment at the pipe abutment (12) has at least two rows of slots (3) with a slot width of 1.8 mm arranged in the pipe wall symmetrically to the pipe axis.

7. Percolation pipe according to one of the above claims, **characterised by**: The pipe segment at the pipe crown (13) has at least four rows of slots (4) with a slot width of 1.6 mm arranged in the pipe wall symmetrically to the pipe axis.

8. Percolation pipe according to one of the above claims, **characterised by**: At least eight rows of slots (2, 3, 4) are arranged in the circumference of the pipe and the rows of slots (2, 3, 4) represent a slot area of not more than 150 cm² per metre.

9. Percolation pipe according to one of the above claims, **characterised by**: A laying mark (14) is arranged at the pipe crown (13) centrally between the four rows of slots (4).

## Revendications

1. Tube d'infiltration (1) pour un système de rigoles de préférence rempli de graviers, où le tube d'infiltration (1) présente, en tant que tube d'infiltration totale, des ouvertures de passage d'eau en forme de fentes réparties sur toute la circonférence,
**caractérisé par,**
**le fait que** la périphérie du tube, depuis le fond du tube (11) jusqu'au sommet du tube (13) est partagée en segments de tubes avec ouvertures de passage d'eau en formes de fentes de surfaces différentes ; dans ce contexte le segment de tube dans la zone du fond de tube (11) présente la plus petite surface, le segment de tube dans la zone du départ de voûte de tube (12) présente la plus grande surface, et le segment de tube dans la zone du sommet de tube (13) présente une surface moyenne des ouvertures de passage d'eau.

2. Tube d'infiltration conforme au point 1, **caractérisé par le fait que** les différences de surface des ouvertures de passage d'eau résultent de la variation des largeurs de fente.

3. Tube d'infiltration conforme au point 1, **caractérisé par le fait que** les différences de surface des ouvertures de passage d'eau résultent de la variation de la longueur de fente.

4. Tube d'infiltration conforme au point 1, **caractérisé par le fait que** les différences de surface des ouvertures de passage d'eau résultent du nombre différent des ouvertures de passage d'eau dans les segments du tube.

5. Tube d'infiltration conforme à l'un des points précédents, **caractérisé par le fait que** le segment de tube dans la zone du fond de tube (11) présente au moins deux rangées de fentes (2) d'une largeur de fente de 1,2 mm et qui sont placées dans la paroi du tube d'une manière symétrique à l'axe du tube.

6. Tube d'infiltration conforme à l'un des points précédents, **caractérisé par le fait que** le segment de tube dans la zone de départ de voûte du tube (12) présente au moins deux rangées de fentes (3) d'une largeur de fente de 1,8 mm et qui sont placées dans la paroi du tube d'une manière symétrique à l'axe du tube.

7. Tube d'infiltration conforme à l'un des points précédents, **caractérisé par le fait que** le segment de tube dans la zone de sommet du tube (13) présente au moins quatre rangées de fentes (4) d'une largeur de fente de 1,6 mm et qui sont placées dans la paroi du tube d'une manière symétrique à l'axe du tube.

8. Tube d'infiltration conforme à l'un des points précédents, **caractérisé par le fait qu'**au moins huit rangées de fentes (2, 3, 4) sont agencées sur toute la circonférence du tube et que les rangées de fentes (2, 3, 4) présentent une surface de fente de 150 cm² maximum par mètre.

9. Tube d'infiltration selon l'un des points précédents, **caractérisé par le fait que** sur le sommet du tube (13) un marquage de pose (14) soit apposé de manière centrée entre les 4 rangées de fentes (4).
